(19) Europäisches Patentamt / European Patent Office / Office européen des brevets

(11) **EP 3 812 103 B1**

(12) **FASCICULE DE BREVET EUROPEEN**

(45) Date de publication et mention
de la délivrance du brevet:
**30.03.2022 Bulletin 2022/13**

(21) Numéro de dépôt: **20202994.8**

(22) Date de dépôt: **21.10.2020**

(51) Classification Internationale des Brevets (IPC):
***B25H 1/00*** *(2006.01)*

(52) Classification Coopérative des Brevets (CPC):
**B25H 1/0028**

(54) **DISPOSITIF INDUSTRIEL DE RECHARGE D'UN OUTIL ELECTROMECANIQUE**

INDUSTRIEVORRICHTUNG ZUM WIEDERAUFLADEN EINES ELEKTROMECHANISCHEN WERKZEUGS

INDUSTRIAL DEVICE FOR CHARGING AN ELECTROMECHANICAL TOOL

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **24.10.2019 FR 1911904**

(43) Date de publication de la demande:
**28.04.2021 Bulletin 2021/17**

(73) Titulaire: **ETABLISSEMENTS GEORGES
RENAULT
44800 Saint Herblain (FR)**

(72) Inventeur: **Guillaume, AMIAUX
44220 COUERON (FR)**

(74) Mandataire: **Vidon Brevets & Stratégie
16B, rue de Jouanet
BP 90333
35703 Rennes Cedex 7 (FR)**

(56) Documents cités:
**GB-A- 2 189 763      US-A1- 2015 318 732
US-B1- 6 565 050**

**Description**

### 1. Domaine de l'invention

Le domaine de l'invention est celui de l'utilisation d'un outil dans un environnement industriel, notamment celui de l'automobile ou l'aéronautique. L'invention concerne plus particulièrement des outils électromécaniques reliés à un support par un câble de suspension afin d'en alléger le poids lors des manipulations.

### 2. Art antérieur

Dans le domaine industriel tel que l'automobile ou l'aéronautique, les opérateurs utilisent des outils permettant d'effectuer l'assemblage des équipements et des objets en cours de fabrication. Ces outils sont typiquement des visseuses qui sont manipulées pour réaliser des opérations de vissage. Ces outils sont utilisés dans des chaînes de fabrication industrielle, dans lesquelles des postes de travail sont placés en ligne ou en îlot, chaque poste de travail est organisé afin d'en optimiser à la fois la productivité et l'ergonomie.
L'architecture de la visseuse ou d'un outil portable en général comporte au moins les éléments suivants :

- une coque comprenant une poignée permettant la saisie de l'outil,
- une interface homme machine intégrant une gâchette de démarrage,
- un moteur électrique,
- une batterie pour l'autonomie de l'appareil.

Tous ces éléments occupent un certain volume et pèsent un certain poids. Ces outils sont généralement, voir notamment le document GB 2 189 763 A, suspendus au-dessus du poste de travail en utilisant un équilibreur qui reprend le poids de l'outil et qui le ramène en position haute lorsque l'opérateur relâche l'outil. L'équilibreur consiste en un câble de suspension dont une extrémité est fixée à l'outil, et l'autre extrémité à un enrouleur placé sur une potence en hauteur et qui exerce une force à peu près égale à celle du poids de l'outil et de sens opposé. Dans ce contexte, un opérateur est amené à saisir son outil à main et à l'amener sur la zone de vissage pour réaliser l'opération d'assemblage. Ensuite l'outil est relâché et remonte au niveau de l'équilibreur pour ne pas gêner l'opérateur dans ses déplacements au sein de son poste de travail.
En plus du câble de suspension, ces outils à main ont besoin d'une énergie électrique qui est acheminée par un câble à deux conducteurs habituellement attachés au câble de suspension. Ce câble électrique est connecté à une centrale conçue pour fournir un courant suffisant sous une tension compatible avec l'outil. Ces outils sont utilisables soit indépendamment de tous systèmes informatiques, soit en association avec un contrôleur, dans tous les cas, le câble d'alimentation permet également de faire passer des commandes et des paramètres de réalisation, et de transmettre des résultats sur les opérations effectuées. La présence d'un câble de suspension et d'un câble électrique diminue la flexibilité de l'ensemble et nuit au bon maniement de l'outil.
Pour résoudre ce problème, il a été conçu des câbles électriques qui peuvent également servir à suspendre l'outil. Mais la section de ces câbles est alors importante et le rend rigide, l'outil est de ce fait peu maniable. De plus un tel câble est très coûteux.
D'autre solutions existent où le câble électrique a disparu et est remplacé par une connexion sur un équilibreur horizontal mais ce type de solution ne répond pas aux attentes des utilisateurs d'avoir un outil sur un équilibreur situé en hauteur qui permet de compenser le poids de l'outil. D'autre part cette solution ne décrit pas de solution de communication entre l'outil et le contrôleur.

### 3. Objectifs de l'invention

L'invention a notamment pour objectif d'apporter une solution efficace à au moins certains de ces différents problèmes.
En particulier, selon au moins un mode de réalisation, un objectif de l'invention est d'alléger l'outil par un moyen de suspension en facilitant le plus possible la maniabilité de l'outil.

### 4. Présentation de l'invention

Pour ceci, l'invention propose un dispositif industriel comportant un outil portatif et au moins un support de cet outil, l'outil étant doté d'un moteur animant en rotation un mécanisme, d'un moyen de stockage d'énergie électrique pour alimenter l'outil lors de son fonctionnement et de moyens pour commander le moteur, le support comportant un filin dont une extrémité est fixée à l'outil, un élément baquet définissant un emplacement pour la préhension de l'outil et un enrouleur dudit filin exerçant une tension verticale sur l'outil de façon à en alléger le poids lorsqu'il n'est plus à son emplacement de préhension. Le dispositif comporte en outre un moyen de transmission d'une énergie électrique pour charger le moyen de stockage d'énergie lorsque l'outil est positionné dans l'élément baquet.

L'invention permet notamment d'alléger l'outil tout en le gardant très maniable en ne chargeant le moyen de stockage d'énergie électrique que dans des moments où l'outil est sur le support.

Selon un premier mode de réalisation, le moyen de transmission est du type inductif, le support comportant des bobines générant un champ électromagnétique au niveau du support qui est capté par des bobines embarquées dans l'outil, la tension générée aux bornes des bobines rechargeant le moyen de stockage d'énergie électrique. De cette manière, il n'y a pas d'éléments métalliques sous tension accessibles aux utilisateurs, limitant ainsi les risques d'électrocution.

Selon un autre mode de réalisation, le moyen de transmission comporte des plots métalliques venant en contact avec des éléments métalliques, lesdit plots et élément métalliques étant fixés les uns au niveau du support, les autres au niveau de l'outil. De cette manière, la liaison pour la transmission de l'énergie est simple et peu onéreuse et ne génère pas de perturbations électromagnétiques.

Selon un autre mode de réalisation, les éléments métalliques sont constitués d'au moins deux pistes concentriques d'une largeur déterminée et placées sur une surface plane, lesdits plots étant positionnés pour venir au contact de cette surface plane lorsque l'outil est dans son emplacement de préhension. De cette manière, l'outil peut être replacé dans son emplacement de préhension sans qu'il y ait besoin de le tourner pour réaliser le contact électrique en vue de sa recharge.

Selon un autre mode de réalisation, la partie arrière de l'outil possède une forme conique qui vient s'insérer dans une forme symétrique de l'élément baquet, le moyen de transmission comporte des plots métalliques venant en contact avec des éléments métalliques, lesdit plots et éléments métalliques étant fixés les uns au niveau des surfaces annulaires et obliques de la forme conique présente sur le support, les autres sur la surface conique de l'outil. De cette manière, la base conique de l'outil est facilement guidé dans son emplacement de préhension par la cavité conique du support.

Selon un autre mode de réalisation, le moyen de transmission de l'énergie électrique transmet également des paramètres d'utilisation de l'outil destinés à commander le moteur lorsque l'outil est en fonctionnement. De cette manière, la liaison électrique est aussi utilisée pour paramètrer le fonctionnement de l'outil.

Selon un autre mode de réalisation, le moyen de stockage d'énergie électrique (6) est constitué par au moins un condensateur. De cette manière, la recharge du moyen de stockage de l'énergie électrique dans l'outil s'effectue plus rapidement.

Selon un autre mode de réalisation, l'enrouleur exerce sur le filin une force qui croît lorsque l'outil se rapproche de son emplacement pour la préhension, la force exercée en fin de course maintenant l'outil dans cette position en le tirant vers l'élément baquet. De cette manière, la remise de l'outil dans son emplacement de préhension et son maintien dans cette position sont facilités.

Selon un autre mode de réalisation, le support comporte un moyen de blocage de l'outil empêchant de le retirer de son emplacement de préhension, ledit moyen de blocage étant commandé par un contrôleur faisant partie du dispositif industriel. De cette manière, l'outil est maintenu sur le support à certain moment empêchant l'opérateur de le prendre et de faire à ce moment des mauvaises maipulations.

Selon un autre mode de réalisation, la charge du moyen de stockage d'énergie électrique de l'outil est contrôlée par ledit contrôleur, le contrôleur compare l'état de charge avec un seuil et déclenche le blocage de l'outil tant que cet état est en-dessous d'une valeur prédéterminée. De cette manière, l'outil ne peut être manipulé que si l'état de charge de son moyen de stockage est suffisant pour réaliser le travail.

## 5. Liste des figures

D'autres caractéristiques et avantages de l'invention apparaîtront à la lecture de la description suivante de modes de réalisation particuliers, donnée à titre de simple exemple illustratif et non limitatif, et des dessins annexés parmi lesquels :

- [Fig 1] : la figure 1 présente un schéma général d'un dispositif industriel comportant un outil et un support de cet outil, selon un exemple de réalisation ;
- [Fig 2] : la figure 2 présente un schéma détaillé des principaux éléments constitutifs du dispositif selon un exemple de réalisation ;
- [Fig 3] : la figure 3 représente un synoptique des éléments électriques placés dans l'outil et dans un dispositif pour le recharger électriquement, selon un exemple de réalisation ;
- [Fig 4] : la figure 4 montre la variation de la tension aux bornes d'un supercondensateur embarqué dans l'outil en fonction de son état de charge ;

- [Fig 5] : la figure 5 représente un schéma de transmission d'énergie électrique à l'outil comportant des plots métalliques;
- [Fig 6] : la figure 6 représente un schéma d'une variante de réalisation pour transmettre de l'énergie électrique à l'outil en utilisant des formes coniques;
- [Fig 7] : la figure 7 illustre une variante de réalisation dans lequel la transmission de l'énergie s'effectue par induction ;
- [Fig 8] : la figure 8 illustre une variante de réalisation dans lequel la transmission de l'énergie s'effectue de façon inductive.

## 6. Description de modes particuliers de réalisation

### 6.1 Principe général

L'invention concerne donc un dispositif industriel comportant un outil portatif et au moins un support de cet outil. L'outil est doté d'un moteur animant en rotation un mécanisme, d'un moyen de stockage d'énergie électrique pour alimenter l'outil lors de son fonctionnement et de moyens pour commander le moteur. Le support comporte un filin dont une extrémité est fixée à l'outil, un élément baquet définissant un emplacement pour la préhension de l'outil et un enrouleur dudit filin exerçant une tension verticale de l'outil de façon à en alléger le poids lorsqu'il n'est plus à son emplacement de préhension. Le dispositif comporte en outre d'un moyen de transmission d'une énergie électrique pour charger le moyen de stockage d'énergie lorsque l'outil est positionné dans l'élément baquet.

L'invention permet notamment d'alléger l'outil pour le rendre maniable et à charger le moyen de stockage d'énergie électrique qu'au moment où l'outil est placé sur son support.

### 6.2 Description d'un mode de réalisation

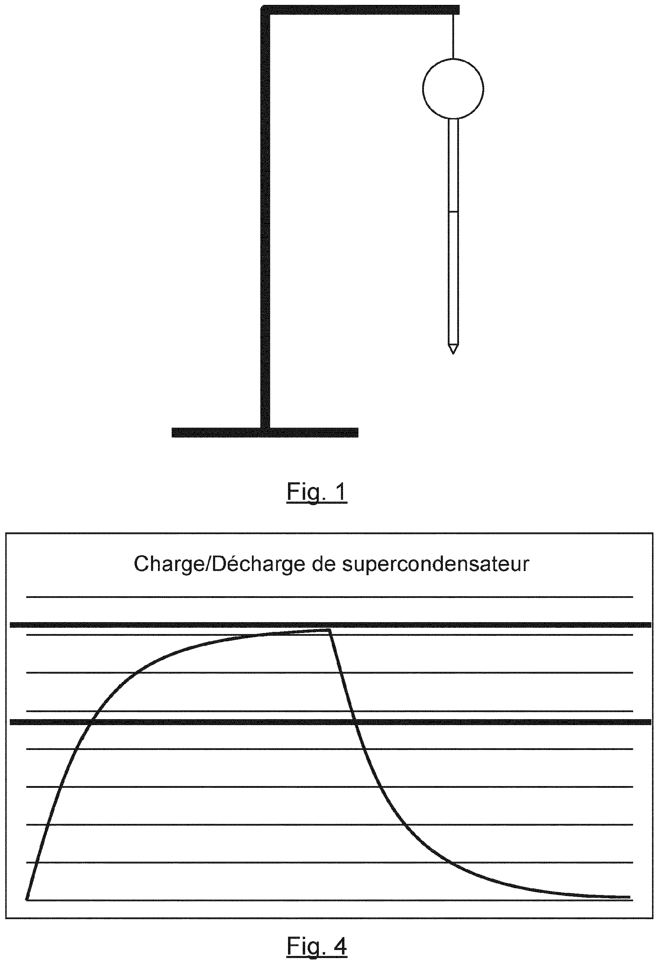

La **Fig. 1** est un schéma général d'un dispositif industriel comportant un outil et un support de cet outil, selon un exemple de réalisation. Selon l'invention, un outil 1 industriel est accroché à un support 10 à un endroit déterminé, ce support est par exemple une potence, l'outil est mis en hauteur de façon à être très visible et ne pas gêner les déplacements de l'opérateur sur le poste de travail, ainsi que d'éventuels objets tels que des établis roulants, ou des chariots de manutention. Selon l'invention, le support dispose d'un moyen pour alléger le poids de l'outil lorsque l'opérateur l'utilise sur son poste de travail, ce moyen est par exemple un filin ou un lien mécanique quelconque retenant l'outil en hauteur et apte à supporter son poids.

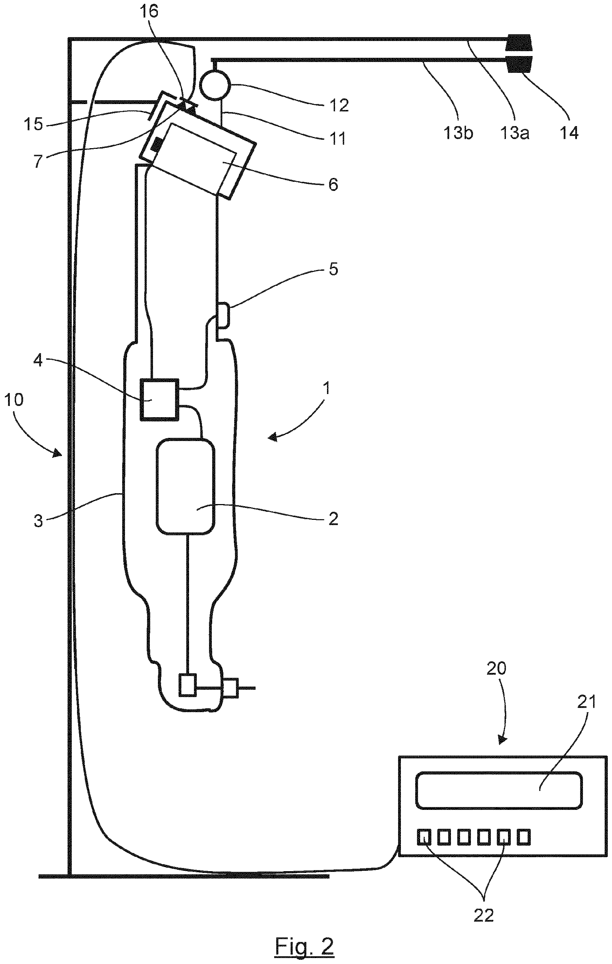

La **Fig. 2** représente un schéma détaillé des principaux éléments constitutifs du dispositif selon un exemple de réalisation de l'invention.

L'outil 1 est ici représenté sous la forme d'une visseuse, mais peut désigner tout outil électromécanique industriel tel que : clé à choc, perceuse, meuleuse, etc. Cet outil comporte typiquement un moteur 2 animant en rotation par un jeu d'axes et de renvois d'axes un porte outil, un carter de protection 3 permettant notamment de prendre l'outil. Sur le plan électrique, l'outil 1 comporte une Unité Centrale 4 reliée à une interface pour communiquer avec un contrôleur. L'Unité centrale 4 reçoit une commande d'une gâchette 5 et contrôle l'alimentation du moteur 2 selon des paramètres transmis par le contrôleur. L'outil est également doté d'un moyen d'alimentation électrique 6 (encore appelé moyen de stockage d'énergie électrique) typiquement au moins un supercondensateur, et/ou une batterie. Dans la première variante, l'outil comporte un ensemble de condensateurs de forte capacité. Sous le vocable « de forte capacité », il faut comprendre d'une capacité d'au moins un farad, qui assure non seulement le filtrage mais aussi le stockage temporaire d'une énergie susceptible d'alimenter un moteur pendant au moins plusieurs secondes. Ces condensateurs sont chargés électriquement en utilisant une connexion électrique 7 lorsque l'outil est sur le support à un emplacement déterminé, la charge s'interrompt lorsque l'outil est pris en main et n'est plus dans l'élément baquet. En utilisation, l'opérateur prend l'outil 1 à l'emplacement déterminé du support 10 et appuie sur la gâchette 5, l'unité centrale 4 détecte l'introduction de cette commande et ferme un interrupteur électrique pour alimenter le moteur 2.

Le support 10 possède typiquement la forme d'une potence posée sur le sol, ce qui n'exclut en rien le fait de le fixer au plafond. Le support comporte un moyen pour alléger le poids de l'outil 1 qui est, dans l'exemple décrit, un filin 11 retenu en hauteur par un enrouleur 12. La partie supérieure du support comporte deux barres horizontales 13a et 13b éventuellement télescopiques qui sont reliées à une extrémité par une rotule 14. La barre inférieure 13b tourne à l'aide de la rotule selon un plan parallèle à l'axe de la barre supérieure 13a et situé en dessous. L'extrémité de la barre inférieure 13b qui est à l'autre bout de la rotule 14, se déplace au-dessus du poste de travail, l'enrouleur 12 étant fixé à cette extrémité.

L'enrouleur 12 dispose d'un élément interne faisant office de ressort de façon que le filin 11 exerce une force constante dirigée vers le haut, l'extrémité du filin étant fixée sur l'outil. La force du ressort étant quasi identique à celle du poids de l'outil, ce dernier présente à l'opérateur un poids quasi nul, lorsqu'il se déplace sous le plan horizontal dans lequel se déplace l'extrémité de la barre inférieure qui est opposée à la rotule. Le support 10 comporte un moyen de solidarisation 15 de l'outil dans un emplacement de préhension, ce moyen consistant par exemple en un élément baquet qui forme un réceptacle pour recevoir une partie de l'outil, de préférence celle fixée au filin. La partie interne de l'élément baquet épouse la forme du carter de l'outil afin de le maintenir au repos dans une position de préhension bien précise. Selon un perfectionnement, des éléments magnétiques fixés sur l'élément baquet 15 améliorent le maintien de l'outil dans cet emplacement de préhension, tout en ne demandant pas un effort trop important pour le décrocher de cet emplacement. Selon une variante, la tension du filin augmente en fin de course et cette unique force suffit pour maintenir l'outil dans cette position en le tirant vers l'élément baquet pour le plaquer contre sa surface interne. Le dispositif industriel dispose d'un moyen de transmission d'énergie 16 qui comporte un équipement amenant l'énergie électrique au niveau de l'élément baquet 15, cet équipement coopérant électriquement avec la connexion 7 présente sur l'outil. Ce moyen est par exemple des plots métalliques reliés à des fils d'alimentation, ou une boucle d'induction générant un champ magnétique capté par une bobine embarquée dans l'outil. Dans ce dernier cas, l'outil dispose d'un dispositif de redressement pour fournir une tension électrique continue. Quel que soit le mode de transmission de l'énergie intermittente transmise lorsque l'outil est sur son support, cette énergie permet de charger le moyen d'alimentation électrique 6 de l'outil, et ainsi d'assurer son fonctionnement lorsque l'opérateur le manipule.

Le poste de travail 1 comporte également un contrôleur 20 destiné à fournir des paramètres d'utilisation de l'outil et à recevoir des historiques de fonctionnement. Le contrôleur 20 est en communication avec l'outil 1, en utilisant le câble de recharge, la connexion électrique 7 et le moyen de transmission d'énergie 16. La communication informatique peut par exemple s'effectuer par courants porteurs, selon une technique connue en soi. En pressant la gâchette, l'outil 1 fonctionne selon une programmation définie par le contrôleur 20. L'opérateur peut visualiser les paramètres et les données historiques sur un écran 21, et dispose d'un clavier 22 pour introduire des valeurs numériques et/ou des consignes de fonctionnement.

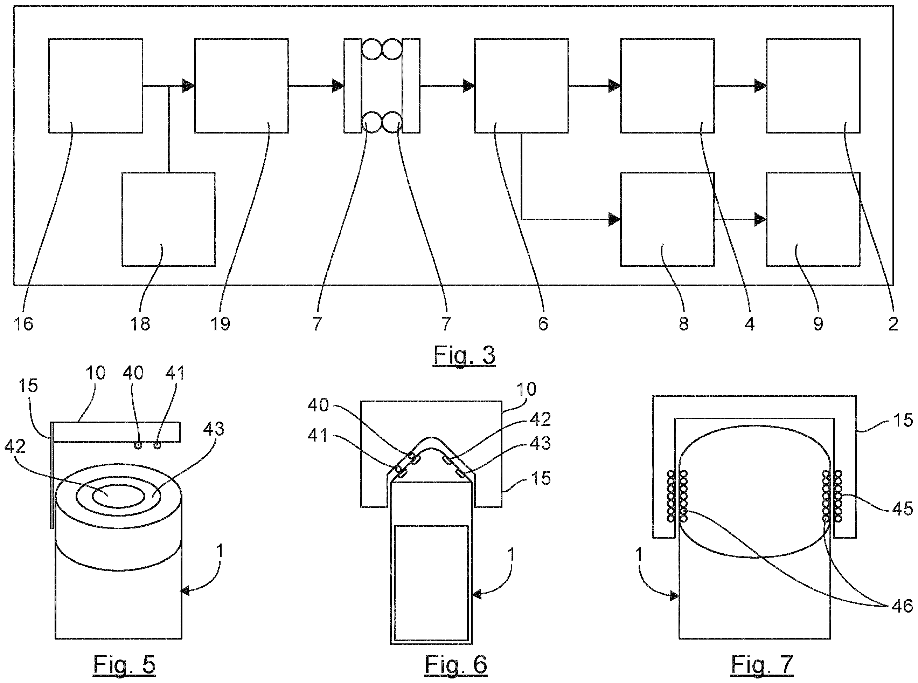

La **Fig. 3** représente un synoptique des principaux éléments électriques placés dans l'outil et dans un dispositif pour le recharger électriquement. Ce dispositif de recharge peut être dans le contrôleur 20 ou dans un dispositif séparé. La partie gauche de la **Fig. 3** décrit les composants principaux présents au niveau du support d'outil, et la partie droite montre les composants électriques embarqués dans l'outil. La transmission d'énergie s'effectue par la connexion électrique 7 de l'outil et par le moyen de transmission d'énergie 16 présent sur le support 10.

Le support 10 comporte une alimentation 16 qui constitue une source d'énergie pour le poste de travail. Ce circuit fournit une tension continue à partie du réseau électrique locale, appelé généralement « le secteur ». Ce mode d'alimentation peut être doublé par un ou plusieurs supercondensateurs 18 qui peuvent palier à une rupture d'alimentation, et qui augmente l'énergie électrique immédiatement disponible. Le courant électrique ainsi généré est transmis à un limiteur 19 chargé d'alimenter le moyen de transmission d'énergie 16 avec des valeurs permettant le bon fonctionnement du moteur. Comme il a été dit précédemment, le couplage électrique avec l'outil peut être réalisé avec des contacts métalliques, ou par induction, ou encore de façon optique avec des émetteurs et des récepteurs photo électriques.

L'outil 1 reçoit l'énergie par la connexion 7 et la transmet au moyen d'alimentation électrique 6, ces moyens étant des supercondensateurs et/ou une batterie. Ce moyen est alors capable d'alimenter continuellement l'outil même si celui-ci n'est plus sur son support 10. Les supercondensateurs embarqués dans l'outil permettent de fournir de forts pics de puissance en cas de besoin du moteur. L'énergie électrique embarquée est transmise au circuit de contrôle 4 chargé de commander le moteur 2, et à un circuit de régulation de la tension 8 qui alimente en courant continu bien régulé la carte électronique 9.

La **Fig. 4** présente la variation de la tension aux bornes des supercondensateurs embarqués dans l'outil en fonction de l'état de charge. Prenons un outil dont la tension d'alimentation est de 18 Volts, on choisit une tension maximale de supercondensateurs de 24V et une minimale de 18V. On a une énergie exploitable de :

$$E_{stockée} = \frac{1}{2}CV_{max}^2$$

$$E_{Utilisable} = \frac{1}{2}CV_{max}^2 - \frac{1}{2}CV_{min}^2 = \frac{1}{2}C(V_{max}^2 - V_{min}^2)$$

Soit une efficacité de :

$$Eff = \frac{(V_{max}^2 - V_{min}^2)}{V_{max}^2} = \frac{24 * 24 - 18 * 18}{24 * 24} = 43\%$$

Un serrage à 10N.m consomme une énergie de 130J. L'énergie nécessaire pour réaliser une séquence de 10 vissages se calcule ainsi :

$$E_{stockée} = \frac{130J * 10}{43\%} = 3023J$$

Une telle énergie nécessite un supercondensateur de valeur :

$$C = \frac{E_{stockée} * 2}{V_{max}^2} = \frac{3023J * 2}{24 * 24} = 10.5F$$

Le moteur est utilisable pour une tension comprise entre les deux traits pleins et horizontaux représentés sur la **Fig. 4.** La carte électronique 9, quant à elle nécessite une tension stabilisée pour fonctionner et a donc besoin d'un régulateur pour fonctionner.

Selon un perfectionnement, le support 10 comporte un moyen de blocage de l'outil en position de préhension, ce moyen empêchant l'opérateur de prendre cet outil. Ce moyen de blocage est avantageusement commandé par le contrôleur 20 qui détermine ainsi les moment où l'outil est utilisable et où il doit rester sur son support. Un premier cas d'usage concerne la recharge du moyen d'alimentation électrique 6 de l'outil qui est contrôlée par le contrôleur 20. Une fois que l'outil est dans son emplacement de préhension, le contrôleur 20 compare l'état de charge avec un seuil et tant que cet état est en-dessous d'une valeur prédéterminée, par exemple 80 %, alors l'outil est bloqué dans son emplacement de préhension par un dispositif mécanique intégré à l'élément baquet. Une information visible ou auditive, par exemple un voyant lumineux rouge, est activé lorsque l'outil est bloqué et que sa charge actuelle ne permet pas une utilisation optimale. Ce seuil de charge est programmable directement ou par apprentissage. En fonction de l'énergie nécessaire pour réaliser une opération d'assemblage, le temps de charge minimum pendant lequel l'outil est bloqué est ajusté au poste de travail. De cette manière, il est possible de minimiser le temps de charge tout en garantissant de pouvoir exécuter jusqu'au bout un certain nombre d'opérations de vissage. Un autre cas d'usage concerne le fait que le contrôleur 20 est associé à plusieurs outils et gère leurs séquences d'utilisation. Le poste de travail comporte par exemple une perceuse, une visseuse bas couple, et une meuleuse. Le travail à réaliser sur ce poste consiste à utiliser d'abord la perceuse, puis la visseuse bas couple, et enfin la meuleuse, ces trois outils disposent de leurs propres supports 10 et sont contrôlés par le même contrôleur 20. Selon ce cas d'usage, le contrôleur ne débloque qu'un seul outil à la fois en respectant le séquencement défini par le travail à réaliser.

6.3 Transmission de l'énergie électrique

La transmission d'énergie au niveau de l'équilibreur peut se faire de deux façons différentes. La **Fig. 5** décrit un premier mode de réalisation. Selon ce mode le moyen de transmission d'énergie 16 comporte des plots métalliques 40 et 41 fixés sur le support 10 et qui viennent en contact avec des pistes métalliques 42 et 43 concentriques d'une largeur déterminée et placées sur la surface plane constituant la base arrière de l'outil. Les plots sont montés sur ressort de façon à exercer une pression sur les pistes et ainsi améliorer le contact électrique. Le fait d'utiliser des pistes concentriques évite une orientation déterminée de l'outil lorsque l'opérateur le place dans son emplacement de préhension. La forme circulaire de l'élément baquet 15 assure le centrage. Les plots 40 et 41 fournissant l'énergie électrique sont polarisés, le plot 40 étant relié au pôle plus de la tension continue, et le plot 41 au pôle moins de cette tension. Le plot 40 est électriquement connecté à la piste concentrique 42 la plus au centre, et le plot 42 est électriquement connecté à la piste concentrique 43 la plus en périphérie. Ce mode de réalisation permet de transmettre une énergie supérieure à celle fournie par un dispositif à induction, mais ce mode de réalisation nécessite de fournir une tension appliquée sur les parties conductrices accessibles à l'utilisateur, qui n'est pas dangereuse. Selon une variante de réalisation, les plots métalliques sont placés au niveau de la base de l'outil 1 et viennent en contact avec les pistes métalliques concentriques d'une largeur déterminée qui sont fixées au niveau de l'élément baquet.

La **Fig. 6** décrit un second mode de réalisation dans lequel l'arrière de l'outil présente une forme conique. Pour réaliser un meilleur positionnement des contacts électriques, la partie arrière de l'outil de forme conique vient s'insérer dans une cavité de forme symétrique constituant l'élément baquet 15 fixé sur le support 10. La surface interne de la cavité conique de l'élément baquet 15 possède des plots métalliques 40 et 41 qui viennent en contact avec des pistes métalliques 42 et 43 concentriques d'une largeur déterminée et placées sur la surface de la forme conique de la base arrière de l'outil. Ces pistes constituent une surface annulaire et oblique autour de l'axe de la base de l'outil. Selon une variante de réalisation, les plots métalliques sont placés au niveau de la base de l'outil 1 et viennent en contact avec les pistes métalliques concentriques d'une largeur déterminée qui sont fixées dans la cavité conique de l'élément baquet.

La **Fig. 7** décrit un troisième mode de réalisation dans lequel la transmission de l'énergie s'effectue de façon inductive. L'outil 1 s'insère dans un élément baquet 15, la surface interne de l'élément baquet 15 et la forme externe de la base arrière de l'outil étant de préférence cylindriques. Une bobine 45 est insérée dans le flanc de la cavité cylindrique de l'élément baquet à une hauteur déterminée, une bobine 46 est implémentée juste sous la surface du flanc de la base arrière de l'outil 1, à une hauteur permettant d'être en vis à vis de la bobine 45, lorsque l'outil est complétement inséré dans l'élément baquet. Un courant parcourt la bobine 45 générant ainsi un champ magnétique qui est capté par la bobine 46 de l'outil et qui produit une tension électrique. Cette tension est ensuite redressée et filtrée afin d'alimenter les circuits et de charger le moyen d'alimentation électrique 6.

Ce troisième mode de réalisation présente de nombreux avantages :

- le moyen de transmission est complétement étanche et ne présente a priori pas d'aspérités qui pourraient permettre à de la poussière de se fixer,
- aucun contact électrique n'est accessible pour l'opérateur, il n'y a donc aucun risque d'électrocution,
- le moyen de transmission ne comporte aucun contact métallique et donc aucune surface d'usure à cause de ces contacts.

Dans le domaine de la recharge sans fil (standard Qi), il est connu de transmettre une puissance de 15W, en utilisant par exemple un circuit ST Microelectronics STWBC-EP. La société NXP échantillonne actuellement des contrôleurs de charge sans fil d'une puissance de 65W (NXP WPS-65WS), ce qui autorise des temps de charge suivant pour des cycles de 5 vis à 2N.m :

$$T_{ST} = \frac{130J * 5}{15W} = 43s$$

$$T_{NXP} = \frac{130J * 5}{65W} = 10s$$

L'Unité Centrale 4 embarquée dans les outils 1 enregistre régulièrement des informations permettant de contrôler l'état du travail. Ces informations sont par exemple du type :

comptage du nombre de vissages effectués sur la pièce,
renvoi de l'information du couple de serrage,
renvoi de l'information de l'angle de serrage,
envoi d'un compte rendu de serrage,
courbes de vissage.

Ces informations sont transmises au contrôleur 20 depuis l'outil. La méthode envisagée est la modulation du courant de charge coté outil puis démodulation coté contrôleur.

Quel que soit le mode de réalisation décrit par les **Fig. 5, 6** et **7,** le dispositif fournissant l'énergie au moyen de transmission d'énergie 16 détecte la présence du courant électrique et donc le fait que l'outil 1 est bien positionné dans l'élément baquet 15. Dans cette position, ce dispositif allume un voyant lumineux de couleur verte de préférence, pour indiquer à l'opérateur que l'outil est bien positionné et que son moyen d'alimentation électrique est en charge.

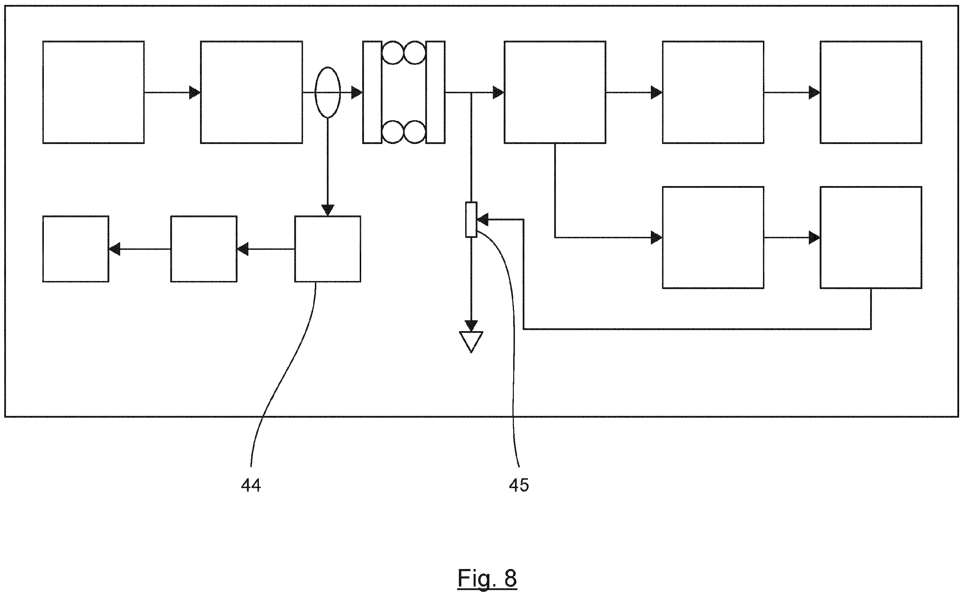

La **Fig. 8** présente un synoptique des principaux éléments électriques permettant la communication de données par courant porteur entre le support et l'outil, selon un exemple de réalisation. Ces données sont notamment des paramètres d'utilisation de l'outil 1 destinés à commander le moteur 2 lorsque l'outil est en fonctionnement. Le support comporte un dispositif 44 pour contrôler une boucle à induction autour des fils d'alimentation, cette boucle génère une composante haute fréquence qui est transmise à l'outil. Un dispositif de réception 45 de signaux haute fréquence est embarqué dans l'outil pour capter les signaux ainsi transmis et pour les envoyer à la carte électronique 9 où ils sont démodulés et convertis en paramètres d'utilisation.

Bien que la présente invention ait été décrite en référence aux modes de réalisation particuliers illustrés, celle-ci n'est nullement limitée par ces modes de réalisation, mais ne l'est que par les revendications annexées. En particulier, l'outil électromécanique concerné peut être une visseuse, une clé à choc, une meuleuse, une perceuse, ou tout autre outil électrique et portatif susceptible d'être accroché à un support. On notera que des changements ou des modifications pourront être apportés par l'Homme du métier.

## Revendications

1. Dispositif industriel comportant un outil portatif (1) et au moins un support (10) de cet outil, l'outil étant doté d'un moteur (2) animant en rotation un mécanisme, d'un moyen de stockage d'énergie électrique (6) pour alimenter l'outil lors de son fonctionnement et de moyens (5) pour commander le moteur, le support comportant un filin (11) dont une extrémité est fixée à l'outil, un élément baquet (15) définissant un emplacement pour la préhension de l'outil et un enrouleur (12) dudit filin exerçant une tension verticale sur l'outil de façon à en alléger le poids lorsqu'il n'est plus à son emplacement de préhension,
caractérisé en ce qu'il comporte un moyen de transmission d'une énergie électrique (16, 7) pour charger le moyen de stockage d'énergie (6) lorsque l'outil est positionné dans l'élément baquet (15).

2. Dispositif industriel selon la revendication 1, caractérisé en ce que le moyen de transmission (16, 7) est du type inductif, le support comportant des bobines (45) générant un champ électromagnétique au niveau du support qui est capté par des bobines (46) embarquées dans l'outil (1), la tension générée aux bornes des bobines rechargeant le moyen de stockage d'énergie électrique (6).

3. Dispositif industriel selon la revendication 1, caractérisé en ce que le moyen de transmission comporte des plots métalliques (40, 41) venant en contact avec des éléments métalliques (42, 43), lesdit plots et élément métalliques étant fixés les uns au niveau du support (10), les autres au niveau de l'outil (1).

4. Dispositif industriel selon la revendication 3, caractérisé en ce que les éléments métalliques (42, 43) sont constitués d'au moins deux pistes concentriques d'une largeur déterminée et placées sur une surface plane, lesdits plots étant positionnés pour venir au contact de cette surface plane lorsque l'outil est dans son emplacement de préhension.

5. Dispositif industriel selon la revendication 1, caractérisé en ce que la partie arrière de l'outil (1) possède une forme conique qui vient s'insérer dans une forme symétrique de l'élément baquet, le moyen de transmission comporte des plots métalliques (40, 41) venant en contact avec des éléments métalliques (42, 43), lesdit plots et éléments métalliques étant fixés les uns au niveau des surfaces annulaires et obliques de la forme conique présente sur le support (10), les autres sur la surface conique de l'outil (1)

6. Dispositif industriel selon l'une quelconque des revendications précédentes, caractérisé en ce que le moyen de transmission (16) de l'énergie électrique transmet également des paramètres d'utilisation de l'outil (1) destinés à commander le moteur (2) lorsque l'outil est en fonctionnement.

7. Dispositif industriel selon l'une quelconque des revendications précédentes, caractérisé en ce que le moyen de stockage d'énergie électrique (6) est constitué par au moins un condensateur.

8. Dispositif industriel selon l'une quelconque des revendications précédentes, caractérisé en ce que l'enrouleur (12) exerce sur le filin (11) une force qui croît lorsque l'outil se rapproche de son emplacement pour la préhension, la force exercée en fin de course maintenant l'outil dans cette position en le tirant vers l'élément baquet (15).

9. Dispositif industriel selon l'une quelconque des revendications précédentes, caractérisé en ce que le support (10) comporte un moyen de blocage de l'outil empêchant de le retirer de son emplacement de préhension, ledit moyen de blocage étant commandé par un contrôleur (20) faisant partie du dispositif industriel.

**10.** Dispositif industriel selon la revendication 9, **caractérisé en ce que** la charge du moyen de stockage d'énergie électrique (6) de l'outil est contrôlée par ledit contrôleur (20), et **en ce que** ledit contrôleur (20) compare l'état de charge avec un seuil et déclenche le blocage de l'outil tant que cet état est en-dessous d'une valeur prédéterminée.

**Patentansprüche**

**1.** Industrievorrichtung, die ein tragbares Werkzeug (1) und mindestens einen Ständer (10) für dieses Werkzeug umfasst, wobei das Werkzeug über einen Motor (2), der einen Mechanismus in Drehung versetzt, ein Mittel zum Speichern elektrischer Energie (6), um das Werkzeug während seines Betriebs mit Strom zu versorgen, und Mittel (5) zum Steuern des Motors verfügt, wobei der Ständer ein Seil (11), dessen eines Endes an dem Werkzeug befestigt ist, ein Wannenelement (15), das einen Ablageort des Werkzeugs definiert, und eine Aufwickeleinheit (12) für das Seil, die eine vertikale Spannung auf das Werkzeug ausübt, um sein Gewicht zu verringern, wenn es sich nicht mehr an seinem Ablageort befindet, umfasst,
**dadurch gekennzeichnet, dass** sie ein Mittel zum Übertragen einer elektrischen Energie (16, 7) umfasst, um das Mittel zum Speichern von Energie (6) aufzuladen, wenn das Werkzeug in dem Wannenelement (15) positioniert ist.

**2.** Industrievorrichtung nach Anspruch 1, **dadurch gekennzeichnet, dass** das Mittel zum Übertragen (16, 7) vom induktiven Typ ist, wobei der Ständer Spulen (45) umfasst, die im Bereich des Ständers ein elektromagnetisches Feld erzeugen, welches von Spulen (46), die sich in dem Werkzeug (1) befinden, erfasst wird, wobei die an den Klemmen der Spulen erzeugte Spannung das Mittel zum Speichern elektrischer Energie (6) wiederauflädt.

**3.** Industrievorrichtung nach Anspruch 1, **dadurch gekennzeichnet, dass** das Mittel zum Übertragen metallische Stifte (40, 41) umfasst, die mit metallischen Elementen (42, 43) in Kontakt kommen, wobei die metallischen Stifte und die metallischen Elemente jeweils an dem Ständer (10) bzw. an dem Werkzeug (1) befestigt sind.

**4.** Industrievorrichtung nach Anspruch 3, **dadurch gekennzeichnet, dass** die metallischen Elemente (42, 43) aus mindestens zwei konzentrischen Bahnen mit einer vorgegebenen Breite bestehen und auf einer ebenen Oberfläche angeordnet sind, wobei die Stifte so positioniert sind, dass sie mit dieser ebenen Oberfläche in Kontakt kommen, wenn sich das Werkzeug an seinem Ablageort befindet.

**5.** Industrievorrichtung nach Anspruch 1, **dadurch gekennzeichnet, dass** der hintere Teil des Werkzeugs (1) eine konische Form besitzt, die sich in eine symmetrische Form des Wannenelements einfügt, wobei das Mittel zum Übertragen metallische Stifte (40, 41) umfasst, die mit metallischen Elementen (42, 43) in Kontakt kommen, wobei die metallischen Stifte und Elemente jeweils an den ringförmigen und schrägen Oberflächen der konischen Form an dem Ständer (10) bzw. an der konischen Oberfläche des Werkzeugs (1) befestigt sind.

**6.** Industrievorrichtung nach einem der vorhergehenden Ansprüche, **dadurch gekennzeichnet, dass** das Mittel zum Übertragen (16) der elektrischen Energie ebenfalls Verwendungsparameter für das Werkzeug (1) überträgt, die dazu bestimmt sind, den Motor (2) zu steuern, wenn das Werkzeug in Betrieb ist.

**7.** Industrievorrichtung nach einem der vorhergehenden Ansprüche, **dadurch gekennzeichnet, dass** das Mittel zum Speichern elektrischer Energie (6) aus mindestens einem Kondensator besteht.

**8.** Industrievorrichtung nach einem der vorhergehenden Ansprüche, **dadurch gekennzeichnet, dass** die Aufwickeleinheit (12) eine Kraft auf das Seil (11) ausübt, die umso größer wird, je mehr sich das Werkzeug seinem Ablageort nähert, wobei die am Endpunkt ausgeübte Kraft das Werkzeug in dieser Position hält, indem sie es zu dem Wannenelement (15) zieht.

**9.** Industrievorrichtung nach einem der vorhergehenden Ansprüche, **dadurch gekennzeichnet, dass** der Ständer (10) ein Mittel zum Verriegeln des Werkzeugs umfasst, welches verhindert, dass dieses aus seinem Ablageort entnommen wird, wobei das Mittel zum Verriegeln von einer Steuereinheit (20) gesteuert wird, die Teil der Industrievorrichtung ist.

**10.** Industrievorrichtung nach Anspruch 9, **dadurch gekennzeichnet, dass** das Laden des Mittels zum Speichern elektrischer Energie (6) des Werkzeugs von der Steuereinheit (20) überwacht wird und dass die Steuereinheit (20) den Ladezustand mit einem Schwellenwert vergleicht und die Verriegelung des Werkzeugs auslöst, solange dieser Zustand unterhalb eines vorgegebenen Wertes liegt.

**Claims**

1. An industrial device including a portable tool (1) and at least one support (10) for this tool, the tool being provided with a motor (2) rotating a mechanism, with an electric energy storage means (6) to power supply the tool during its operation and with means (5) for controlling the motor, the support including a wire (11) one end of which is attached to the tool, a bucket element (15) defining a gripping location for the tool and a reel (12) of said wire exerting vertical tension on the tool so as to lighten its weight when it is no longer in its gripping location, **characterised in that** it includes an electrical energy transmission means (16, 7) for charging the energy storage means (6) when the tool is positioned in the bucket element (15).

2. The industrial device according to claim 1, **characterised in that** the transmission means (16, 7) is of the inductive type, the support including coils (45) generating an electromagnetic field at the support which is picked up by the coils (46) embedded in the tool (1), the voltage generated at the terminals of the coils recharging the electrical energy storage means (6).

3. The industrial device according to claim 1, **characterised in that** the transmission means includes metal studs (40, 41) contacting metal elements (42, 43), said metal studs and element being attached one at the support (10), the other at the tool (1).

4. The industrial device according to claim 3, **characterised in that** the metal elements (42, 43) consist of at least two concentric tracks of a determined width and placed on a flat surface, said studs being positioned to contact this flat surface when the tool is in its gripping location.

5. The industrial device according to claim 1, **characterised in that** the rear part of the tool (1) has a conical shape which comes to be inserted into a symmetrical shape of the bucket element, the transmission means includes metal studs (40, 41) contacting metal elements (42, 43), said metal studs and elements being fixed one at the annular and oblique surfaces of the conical shape present on the support (10), the other on the conical tool surface (1).

6. The industrial device according to any one of the preceding claims, **characterised in that** the electrical energy transmission mean (16) also transmits parameters of use of the tool (1) intended to control the motor (2) when the tool is in operation.

7. The industrial device according to any one of the preceding claims, **characterised in that** the electrical energy storage means (6) consists of at least one capacitor.

8. The industrial device according to any one of the preceding claims, **characterised in that** the reel (12) exerts on the wire (11) a force which increases when the tool approaches its location for gripping, the force exerted at the end of the travel maintaining the tool in this position by pulling it towards the bucket element (15) .

9. The industrial device according to any one of the preceding claims, **characterised in that** the support (10) includes a locking mean for the tool preventing it from being withdrawn from its gripping location, said locking mean being controlled by a controller (20) forming part of the industrial device.

10. The industrial device according to claim 9, **characterised in that** the charge of the electrical energy storage means (6) of the tool is controlled by said controller (20), and **in that** said controller (20) compares the state of charge with a threshold and triggers the locking of the tool as long as this state is below a predetermined value.

Fig. 1

Charge/Décharge de supercondensateur

Fig. 4

Fig. 2

Fig. 3

Fig. 5

Fig. 6

Fig. 7

EP 3 812 103 B1

Fig. 8

45

44

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- GB 2189763 A